# EUROPEAN PATENT SPECIFICATION

(11) **EP 3 128 456 B1**
(45) Date of publication and mention of the grant of the patent: **29.09.2021**
(21) Application number: 16182563.3
(22) Date of filing: 03.08.2016
(51) Int. Cl.: G06F 21/60, G06F 21/34, H04L 29/08, H04N 1/44, H04L 29/06, G06F 3/12

(54) **SYSTEM AND METHOD FOR AUTHENTICATING VIA AN EXTERNAL CARD AND OPERATING VIA REMOTE TERMINAL**
SYSTEM UND VERFAHREN ZUM AUTHENTIFIZIEREN ÜBER EINE EXTERNE KARTE UND BEDIENEN ÜBER EIN REMOTE-TERMINAL
SYSTÈME ET PROCÉDÉ POUR AUTHENTIFICATION PARMIS UNE CARTE EXTERNE ET OPERATION PARMIS UN TERMINAL À DISTANCE

(30) Priority: 06.08.2015 JP 2015156337
(43) Date of publication of application: 08.02.2017
(73) Proprietor: Ricoh Company, Ltd., Tokyo 143-8555 (JP)
(72) Inventor: HORI, Seijiro, Tokyo 143-8555 (JP)
(74) Representative: SSM Sandmair

(56) References cited:
- US-A1- 2009 077 654
- US-A1- 2013 086 638
- US-A1- 2014 016 159
- US-A1- 2014 123 317
- US-A1- 2014 168 687

## Description

### BACKGROUND OF THE INVENTION

### 1. Field of the Invention

The present disclosure relates to apparatuses, information processing systems, and information processing methods.

### 2. Description of the Related Art

In apparatuses, such as image forming apparatuses, used in offices, an authentication function based on username and password input in a predetermined log-in screen may be implemented as a default authentication function.

Also, in such apparatuses, application programs for enhancing functions of the apparatuses may be installed. In this case, for example, the default authentication function may be replaced with an authentication function using a card such as an employee ID card.

On the other hand, recently, convenience of various apparatuses is improved by performing operations in conjunction with smart terminals including a smartphone and a tablet terminal. Also, as for the image forming apparatuses, etc., it is planed that an operational panel of the apparatus is replaced with the smart terminal. In this case, it is expected that more application programs related to the apparatus may be distributed when the apparatus can be controlled by an application program executed in the smart terminal. That is, more support by servicemen, etc., will be required because installation method of the application programs may be different on an apparatus-by-apparatus basis. Meanwhile, install and uninstall of the application program in the smart terminal are likely to be performed easily because only simple operations are required.

However, if a basic function, such as an authentication function, for using the apparatus is also implemented in the smart terminal, workload for developing software for accepting the smart terminal as an operational unit of the apparatus may be increased. Also, in view of effective utilization of assets, it is not preferable to implement another authentication function in the smart terminal whereas the authentication function has been already implemented in the apparatus. Even so, implementation of software in the smartphone is still required because a log-in screen for limiting user's operation needs to be displayed on the smart terminal.

### [RELATED ART DOCUMENT]

### [PATENT DOCUMENT]

[Patent Document 1]: Japanese Unexamined Patent Application Publication No. 2009-069992

US 2014/0123317 A1 describes a confidential information management system which includes an entry control apparatus, an information storage unit, an electronic apparatus, and an access control unit. The electronic apparatus includes a user authentication unit that decides whether a user is authorized to log in in the electronic apparatus, and a communication unit communicable with a mobile terminal of the user. The access control unit registers, when the user authentication unit permits the user to log in in the electronic apparatus, the mobile terminal to communicate with the communication unit, and decides whether the mobile terminal is permitted to access confidential information in the information storage unit. The access control unit also validates the registration of the mobile terminal of the user permitted to log in in the electronic apparatus while the entry control apparatus recognizes that the user is in the controlled area, and permits the mobile terminal to access the confidential information.

US 2013/086638 A1 relates to systems, apparatus and computer-readable storage medium for recording images on a recording medium. In this respect, when authentication information is input via an IC card reader and includes predetermined information, a portable terminal corresponding to the authentication information is identified, and specific identification information that identifies an image-data file associated with the authentication information is extracted. The extracted specific identification information is transmitted to the identified portable terminal, and the portable terminal displays a list of the received specific identification information on its touch panel. The operation of a printing mechanism is controlled, so that the image-data file corresponding to the specific identification information that selected with a touch panel on the portable terminal is accessed, and an image defined by the image-data file defines is printed on a sheet.

US 2014/168687 A1 describes an image forming apparatus supporting a near field communication (NFC) function and a method of performing authentication of an NFC device in the image forming apparatus is provided. The method includes receiving identification information by tagging an NFC device and determining whether the NFC device is authenticated or not, by using the received identification information.

US 2009/077654 A1 describes techniques for securely managing, using smart cards, the usage of a peripheral device. In this respect, it is described that both the peripheral device and the smart card have digital certificates and a means for authenticating each other. Each device requires authentication of the other device before access to the device's resources is granted. In one embodiment of the invention, the smart card executes a local Java application for managing usage data. The application provides quota and prior usage data to the peripheral device, and updates on the smart card usage data provided by the peripheral device. The usage data on the smart card is used to limit, audit, or track access to resources and operations on the peripheral device. It is also described that the authentication and usage management functions of the smart card is implemented on a remote server.

### SUMMARY OF THE INVENTION

The invention is defined by the subject-matter of the independent claims.

### ADVANTAGES OF THE INVENTION

Advantageously, it is enabled effective utilization of authentication function implemented in an apparatus in a case where an information processing terminal is used as an operational unit of the apparatus.

Advantageously, there is provided an apparatus including, a data acquisition unit configured to acquire data from a mobile recording medium, an authentication unit configured to perform authentication based on the acquired data, and an erasing unit configured to erase a screen for limiting user's operation in response to detecting a successful authentication performed by the authentication unit and detecting that an operational unit is included in the apparatus, wherein the erasing unit transmits a notification of the successful authentication to an information processing terminal in response to detecting the successful authentication performed by the authentication unit and detecting that the information processing terminal is connected to the apparatus via a network.

Other features, and advantages of the present disclosure will become apparent from the following detailed description when read in conjunction with the accompanying drawings.

### BRIEF DESCRIPTION OF THE DRAWINGS

FIG. 1 is a diagram illustrating an example hardware configuration of an image forming apparatus of a first embodiment.
FIG. 2 is a diagram illustrating example software architecture of the image forming apparatus of the first embodiment.
FIG. 3 is an example functional configuration of a SDK application package, a SDK platform, and a control service of the first embodiment.
FIG. 4 is a sequence diagram illustrating an example process of a card authentication in the first embodiment.
FIG. 5 is a diagram illustrating an example hardware configuration of the image forming apparatus of a second embodiment.
FIG. 6 is a diagram illustrating an example hardware configuration of an information processing terminal of the second embodiment.
FIG. 7 is a diagram illustrating an example software configuration of the information processing terminal of the second embodiment.
FIG. 8 is a sequence diagram illustrating an example process of card authentication of the second embodiment.

### DETAILED DESCRIPTION OF THE PREFERRED EMBODIMENTS

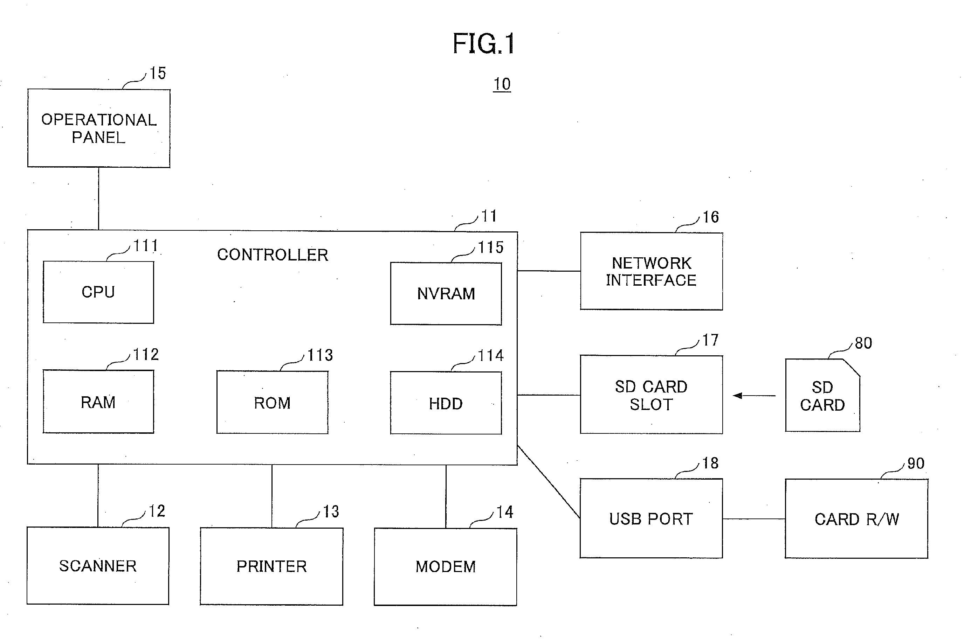

In the following, embodiments of the present disclosure will be described with reference to accompanying drawings. FIG. 1 is a diagram illustrating an example hardware configuration of an image forming apparatus of a first embodiment of the present disclosure. In FIG. 1, the image forming apparatus 10 includes a controller 11, a scanner 12, a printer 13, a modem 14, an operational panel 15, a network interface 16, a SD card slot 17, a USB (Universal Serial Bus) port 18, and the like.

The controller 11 includes a CPU 111, a RAM 112, a ROM 113, a HDD 114, a NVRAM 115, and the like. The ROM 113 stores programs, data that is used in the programs, and the like. The RAM 112 is used as a memory area into which the program is loaded, or a work area for the loaded program. The CPU 111 achieves functions by executing the program loaded into the RAM 112. The HDD 114 stores programs and data used by the programs. The NVRAM 115 stores setting information, and the like.

The scanner 12 is hardware (image reading unit) for scanning image data from a document. The printer 13 is hardware (print unit) for performing print operation based on the printing data on a printing sheet. The modem 14 is hardware for connecting to telephone network, which is used for performing transmission/reception of image data through a FAX communication. The operational panel 15 is hardware including an input unit such as buttons for accepting user's operation, a display unit such as a liquid crystal display (LCD) panel, and the like. The LCD panel may have a touch panel function. In this case, the LCD panel also serves as an input unit. The network interface 16 is hardware for connecting to a network such as a LAN (wired or wireless). The SD card slot 17 is used for retrieving the program stored in the SD card 80. That is, in the image forming apparatus 10, not only the program stored in the ROM 113, but also the program stored in the SD card 80 can be loaded into the RAM 112 to be executed. Additionally, other recording media (e.g., CD-ROM, USB, etc.) may be used instead of the SD card 80. That is, type of the recording medium corresponding to the SD card 80 is not limited. In this case, a hardware component corresponding to the type of the recording medium may be provided instead of the SD card slot 17. An USB cable is connected with the USB port 18. In the present embodiment, a card R/W (reader/writer) 90 is connected to the USB port 18 via the USB cable. The card R/W 90 is provided for reading data from a card such as an employee ID card, for write data into the card, etc., where respective users of the image forming apparatus 10 have the employee ID cards. Additionally, the card may be a magnetic card, or may be an IC card.

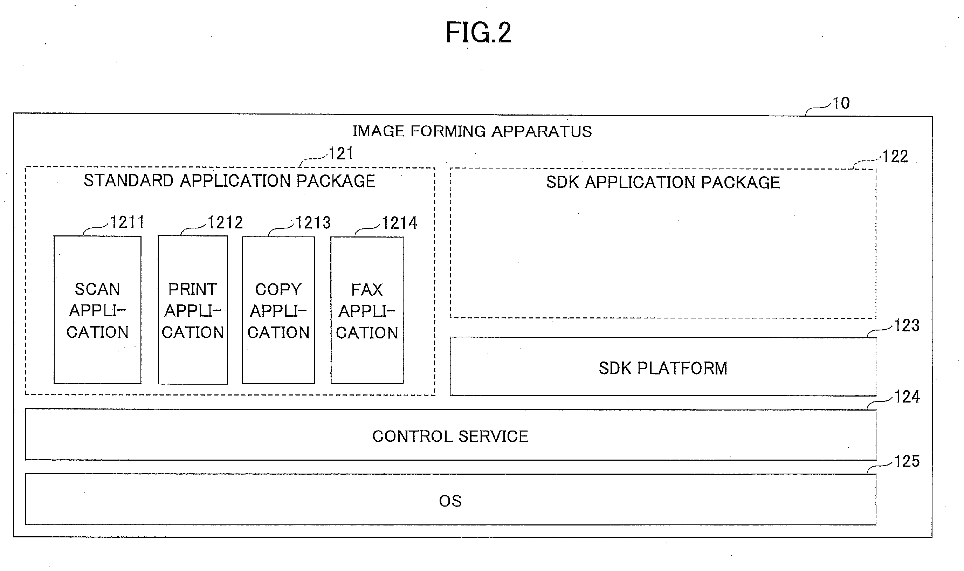

FIG. 2 is a diagram illustrating example software architecture of the image forming apparatus 10 of the first embodiment. In FIG. 2, the image forming apparatus 10 includes a standard application package 121, a SDK application package 122, a SDK platform 123, a control service 124, an OS 125, and the like.

The standard application package 121 is a set of application programs which are normally installed (at time of shipment) in the image forming apparatus 10. In FIG. 2, a scan application 1211, a print application 1212, a copy application 1213, a FAX application 1214 are illustrated as example application programs included in the standard application package 121. The scan application 1211 executes a scan job using the scanner 12, and the like. The print application 1212 executes a printing job of printing data using the printer 13, and the like. The copy application 1213 executes a copy job using the scanner 12, the printer 13, and the like. The FAX application 1214 executes a FAX transmission job or a reception job using the modem 14, and the like. Additionally, the scanner 12, the printer 13, and the modem 14 are examples of hardware components unique to the image forming apparatus 10.

The control service 124 is a set of software modules for providing functions for controlling hardware resources or functions common to respective application programs with higher order programs, and the like. For example, the control service 124 has a function related to network communication, a function for controlling the scanner 12, a function for controlling the printer 13, a function for managing the memory (RAM 112, ROM 113, NVRAM115, etc.), a default function of authentication, and the like.

The SDK application package 122 is one or more application programs (also referred to as plug-in) for expanding functions of the image forming apparatus 10, which are additionally installed after the shipment of the image forming apparatus 10.

The SDK platform 123 includes an API (Application Program Interface) for developing application program included in the SDK application package 122, and provides execution environment of the application program included in the SDK application package 122. For example, the API may be a function, a class defined in object oriented manner, a method of the class, and the like. In the following, the API provided by the SDK platform 123 is referred to as "SDKAPI". The SDK application package 122 can use all or part of functions provided by the control service 124 through the SDKAPI. For example, the SDK platform 123 provides SDKAPI related to scanning function, SDKAPI related to printing function, SDKAPI related to copying function, etc., with the SDK application package 122. The SDKAPI is published, and a third vender can develop the application program included in the SDK application package 122. Additionally, the SDK platform 123 may include Java VM (Virtual Machine). In this case, the SDK application package 122 is developed in Java language.

The OS 125 is an OS (Operating System). Software of the image forming apparatus 10 operates as a process or a thread in the OS 125.

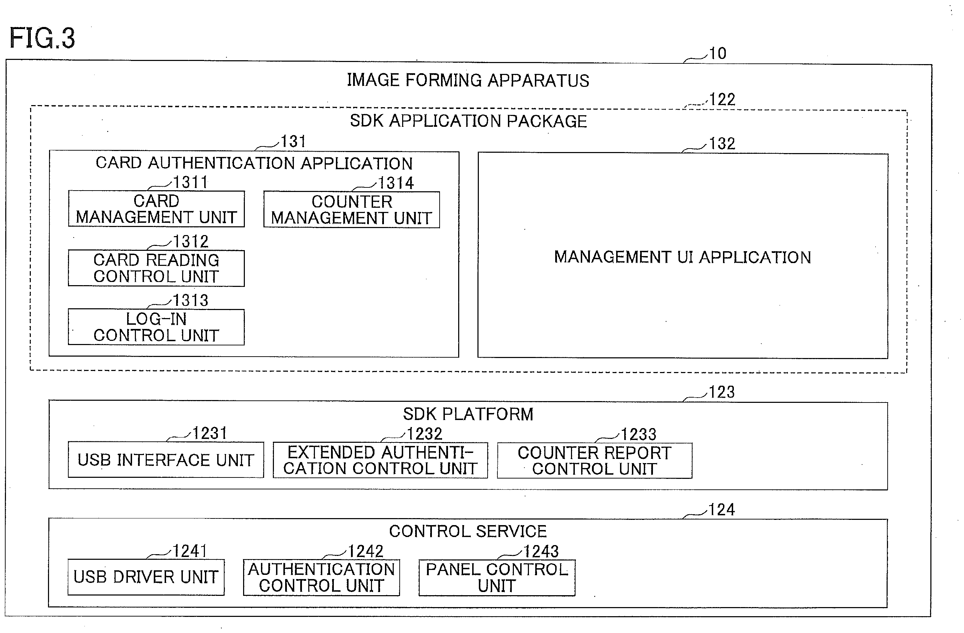

In the following, a specific functional configuration of the first embodiment including the SDK application package 122, the SDK platform 123, and the control service 124 will be described. FIG. 3 is an example functional configuration of the SDK application package, the SDK platform, and the control service of the first embodiment.

In FIG. 3, the control service 124 causes the CPU 111 to serve as an USB driver unit 1241, an authentication control unit 1242, a panel control unit 1243, and the like.

The USB driver unit 1241 performs control of external apparatus connected to the USB port 18. In the present embodiment, the card R/W 90 is to be controlled. The authentication control unit 1242 achieves a default authentication function of the image forming apparatus 10. For example, the authentication control unit 1242 controls display/erasure of a log-in screen, authentication of username and password input in the log-in screen. However, the authentication function is expected to be enhanced. For example, the authentication function can be alternately performed by the SDK application package 122. When the authentication function is alternately performed, the authentication control unit 1242 delegates an alternate unit that authenticates the username and password. Also, the authentication control unit 1242 controls update of a counter of the image forming apparatus 10 in accordance with job execution. For example, the counter is a parameter indicating a number of paper sheets output in accordance with the job execution in the image forming apparatus 10, and stored in the NVRAM 115. The panel control unit 1243 controls display of image in the operational panel 15.

The SDK platform 123 causes the CPU 111 to serve as an USB interface unit 1231, an extended authentication control unit 1232, a counter report control unit 1233, and the like.

The USB interface unit 1231 provides the SDK application package 122 with SDKAPI related to functions of the USB driver unit 1241. The extended authentication control unit 1232 provides the SDK application package 122 (card authentication application 131 in the present embodiment) with SDKAPI required for extending the authentication function. The counter report control unit 1233 transmits information indicating the update of the counter by the authentication control unit 1242 to the SDK application package 122.

In FIG. 3, also, a card authentication application 131 and a management UI application 132 are illustrated as specific examples of the SDK application package 122. The card authentication application 131 is included in the SDK application package 122, and provided for extending the default authentication function of the image forming apparatus 10. In the present embodiment, the card authentication application 131 achieves authentication using a card (hereinafter referred to as "card authentication"). In the card authentication, input operation of the username and password in the log-in screen is not required. As illustrated in FIG. 3, the card authentication application 131 causes the CPU 111 to serve as a card management unit 1311, a card reading control unit 1312, a log-in control unit 1313, a counter management unit 1314, and the like.

The card management unit 1311 manages information indicative of validity of the card with respect to every card identification information (hereinafter referred to as "card ID) by using e.g., HDD 114.

The card reading control unit 1312 controls data reading from the card set in the card R/W 90.

The log-in control unit 1313 determines whether the user is allowed to log in based on the data read from the card.

The counter management unit 1314 manages counter value with respect to each card or each function by using e.g., the HDD 114. Additionally, the counter management unit 1314 manages the counter separated from the control service 124 because the control service 124 does not have management function of the counter on a card-by-card basis.

A management UI application 132 is included in the SDK application package 122. The management UI application 132 provides a user interface related to the card authentication application 131. For example, the management UI application 132 displays the user interface for indicating, editing, or printing the counter value managed by the card authentication application 131, etc., in the operational panel 15. The management UI application 132 displays the user interface for accepting an operation to validate or invalidate the card on a card ID-by-card ID basis in the operational panel 15.

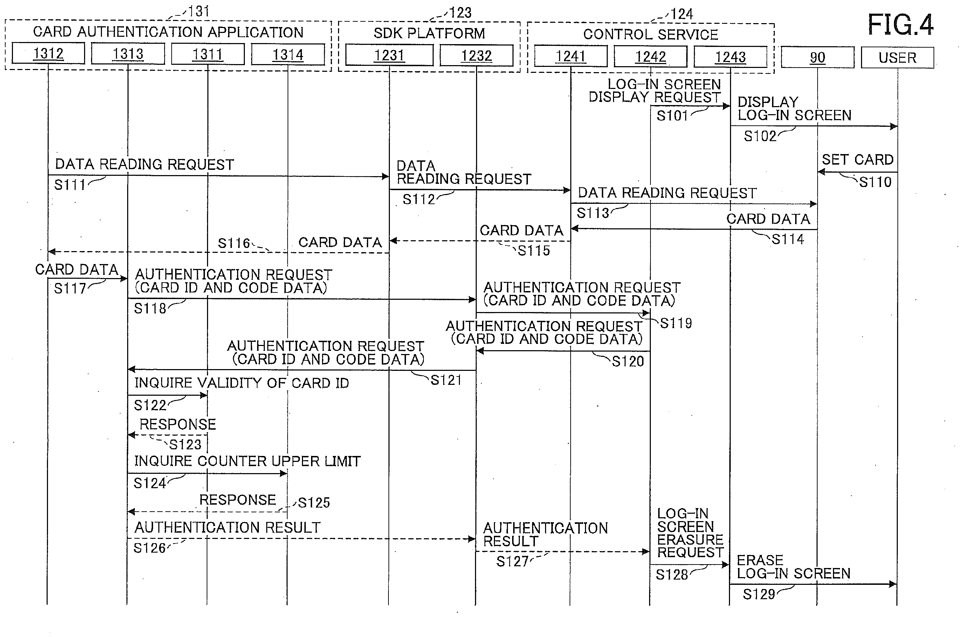

In the following, a process performed by the image forming apparatus 10 of the first embodiment will be described. FIG. 4 is a sequence diagram illustrating an example process of the card authentication in the first embodiment.

In a case where setting information of user authentication requirement is set to be "required" in the image forming apparatus 10, the authentication control unit 1242 requests the panel control unit 1243 to display the log-in screen just after starting the image forming apparatus 10, or to display the log-in screen in response to user's log-out (S101). In response to the request, the panel control unit 1243 displays the log-in screen by superimposing the log-in screen on an operational screen of the image forming apparatus 10 (S102). For example, the log-in screen may prompt the user to input the username and password in accordance with the default authentication function. Additionally, free operations of the image forming apparatus 10 through the operational panel 15 can be limited by displaying the log-in screen since the user cannot operate the image forming apparatus 10 through the operational panel 15 while the log-in screen is displayed.

Additionally, if the setting information of user authentication requirement is set to be "not required" in the image forming apparatus 10, the display of the log-in screen is not required. Accordingly, the process illustrated in FIG. 4 is not performed.

On the other hand, the card reading control unit 1312 of the card authentication application 131 periodically request the USB interface unit 1231 to read the data from the card while no users log in the image forming apparatus 10 (S111). The request is transmitted to the USB driver unit 1241 through the USB interface unit 1231 (S112). In response to the request, the USB driver unit 1241 requests the card R/W 90 to read the data from the card (S113). In a case where any card is not set in the card R/W 90 at this timing, the data reading operation results in failure. In this case, a response indicating the reading operation failure is transmitted to the card reading control unit 1312 through a reverse path of the data reading request.

On the other hand, in a case where the card is set in the card R/W 90 by the user (S110), the USB driver unit 1241 acquires the data read from the card (hereinafter referred to as "card data") from the card R/W 90 (S114). The card data acquired by the USB driver unit 1241 is transmitted to the card reading control unit 1312 through the USB interface unit 1231 (S115 and S116). Additionally, "the card is set in the card R/W 90" means that the card is passed over the card R/W 90 or inserted in the card R/W 90 so as to enable the card R/W 90 to read the data of the card.

The card reading control unit 1312 inputs the transmitted card data into the log-in control unit 1313 (S117). The log-in control unit 1313 extracts the card ID and code data from the card data, and inputs an authentication request including the card ID and the code data into the extended authentication control unit 1232 (S118). For example, the card ID is inserted at a certain portion of the card data, where the portion is defined as a predetermined position with reference to the head of the card data. Also, the code data indicates a manufacturer of the card, etc., and inserted at another portion of the card data, where the portion is defined as another predetermined position with reference to the head of the card data. Additionally, the process of step S118 is achieved by calling the SDKAPI provided by the extended authentication control unit 1232. The SDKAPI is a method whose arguments are the username and password. The log-in control unit 1313 assigns the card ID to the username and assigns the code data to the password, thereby calling the SDKAPI.

Subsequently, the extended authentication control unit 1232 inputs the authentication request including the card ID and the code data into the authentication control unit 1242 (S119). The process of step S 119 is achieved by calling the API provided by the authentication control unit 1242. The API is a method whose arguments are the username and password. The extended authentication control unit 1232 assigns the card ID to the username and assigns the code data to the password, thereby calling the API. However, the extended authentication control unit 1232 only assigns the username and password, which have been assigned in the own SDKAPI, as the username and password of the authentication control unit 1242. Hence, the extended authentication control unit 1232 does not recognize that the username and password are the card ID and the code data.

The authentication control unit 1242 delegates the alternate unit that performs the authentication in a case where the delegation of the authentication function has been set in advance. In the present embodiment, the card authentication application 131 is set to be the alternate unit. However, the authentication control unit 1242 cannot directly recognize the card authentication application 131 because the authentication control unit 1242 is included in the control service 124. Therefore, the authentication control unit 1242 recognizes the extended authentication control unit 1232 in the SDK platform 123 as the alternate unit. Hence, the authentication control unit 1242 transmits the authentication request input in step S119 to the extended authentication control unit 1232 (S120). Additionally, for example, the delegation of the authentication function to the card authentication application 131 may be set through a declaration transmitted, just after starting the image forming apparatus 10, from the card authentication application 131 to the authentication control unit 1242 via the extended authentication control unit 1232 of the SDK platform 123. Thus, the alternate unit to which the authentication function is to be delegated is set in the authentication control unit 1242. According to the declaration, the authentication control unit 1242 can recognize the extended authentication control unit 1232 as the alternate unit, and the extended authentication control unit 1232 can recognize the card authentication application 131 as the alternate unit.

The extended authentication control unit 1232 transmits the authentication request to the log-in control unit 1313 of the card authentication application 131, where the log-in control unit 1313 serves as the alternate unit to which the authentication function is delegated (S121). The log-in control unit 1313 inquires the validity of the card ID (hereinafter referred to as "object card ID") that is assigned to the argument of the authentication request to the card management unit 1311 (S122). For example, the card management unit 1311 determines the validity of the object card ID with reference to the information indicating the validity on a card ID-by-card ID basis stored in the HDD 114. The card management unit 1311 transmits a response including the determination result (valid or invalid) to the log-in control unit 1313 (S123).

In a case where the transmitted response indicates that the object ID is valid, for example, the log-in control unit 1313 inquires the counter management unit 1314 whether the stored counter value corresponding to the card ID has reached an upper limit (S124). For example, the counter management unit 1314 determines whether counter value (that is, a usage amount of the image forming apparatus 10) corresponding to the card ID stored in the HDD 114 reaches the upper limit, thereby transmitting the determination result to the log-in control unit 1313 (S125). Additionally, different upper limit may be set on a card ID-by-card ID basis, or the same upper limit may be set for all card IDs.

In a case where the counter value corresponding to the object card ID does not reaches the upper limit, the log-in control unit 1313 transmits the authentication result indicating a successful authentication (indicating that user is allowed to log in) to the extended authentication control unit 1232 (S126). On the other hand, in a case where the response transmitted in step S123 indicates that the object card ID is invalid, or that the counter value corresponding to the object card ID reaches the upper limit, the log-in control unit 1313 transmits the authentication result indicating an authentication failure (indicating that user's log-in is denied) to the extended authentication control unit 1232 in step S126. Additionally, in addition to the determination of the object card ID's validity and the counter value corresponding to the object ID, a determination whether the code data coincides with an expected value may be performed.

The extended authentication control unit 1232 transmits the authentication result transmitted from the log-in control unit 1313 to the authentication control unit 1242 (S127). In a case where the authentication result indicates the successful authentication result, the authentication control unit 1242 requests the panel control unit 1243 to erase the log-in screen (S128). In response to the request, the panel control unit 1243 erases the log-in screen (S129). Consequently, the limitation of the operation caused by the log-in screen is released, and the user can operate the image forming apparatus 10.

In the following, a second embodiment of the present disclosure will be described. In the second embodiment, mainly, differences between the first embodiment and the second embodiment will be described. Therefore, configurations in the second embodiment on which descriptions are not given may be similar to those in the first embodiment.

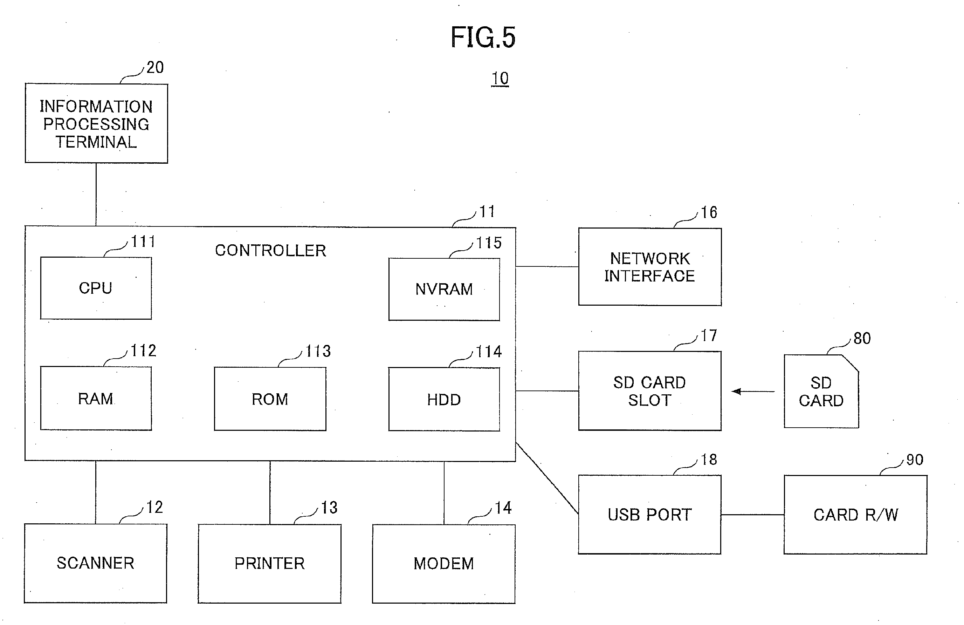

FIG. 5 is a diagram illustrating an example hardware configuration of the image forming apparatus of the second embodiment. In FIG. 5, identical reference numerals will be applied to elements or the like that have substantially similar functions and configurations to those in FIG. 1, and descriptions thereof may be omitted.

In FIG. 5, an information processing terminal 20 is connected to the image forming apparatus 10 via a network such as a USB cable. For example, the information processing terminal 20 is an electronic device, such as a smartphone and a tablet terminal, including a CPU and OS that are separately provided from those of the image forming apparatus 10. In the present embodiment, the information processing terminal 20 serves as an operational unit of the image forming apparatus 10. More specifically, the information processing terminal 20 is connected to the image forming apparatus 10 instead of the operational panel 15 that is provided as a dedicated operational unit for the image forming apparatus 10 in the first embodiment.

For example, the information processing terminal 20 may be installed and fixed at a predetermined position (e.g., a position at which the operational panel 15 may be disposed) in the image forming apparatus 10. In this case, the information processing terminal 20 and the image forming apparatus 10 may be recognized as one apparatus. Or, the information processing terminal 20 may be detachable from the image forming apparatus 10. When the information processing terminal 20 is detached from the image forming apparatus 10, the information processing terminal 20 may communicate with the image forming apparatus 10 through wireless communication such as BLUETOOTH, infrared ray communication, and wireless LAN so as to serve as the operational unit.

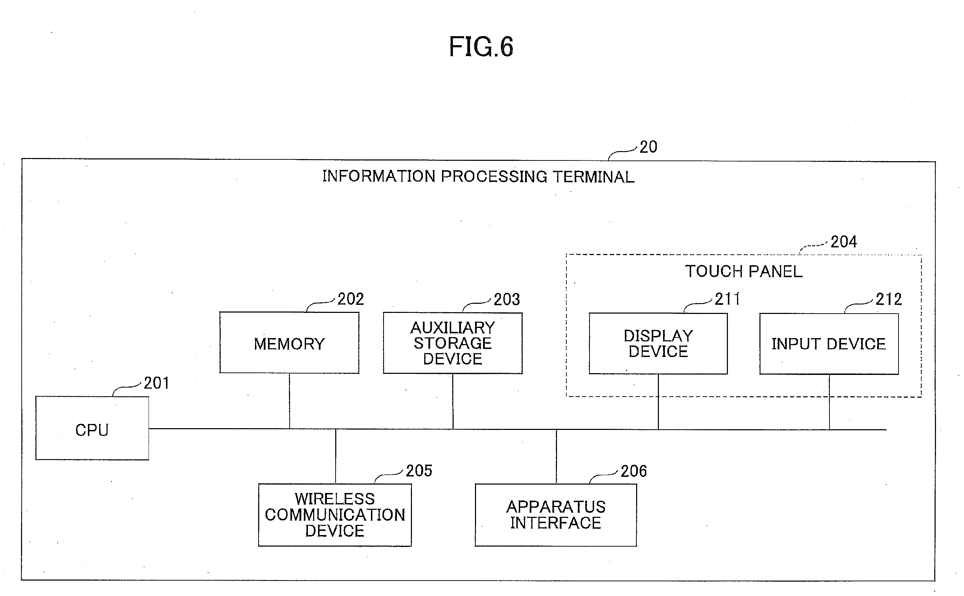

FIG. 6 is a diagram illustrating an example hardware configuration of the information processing terminal of the second embodiment. In FIG. 6, the information processing terminal 20 includes a CPU 201, a memory 202, an auxiliary storage device 203, a touch panel 204, a wireless communication device 205, an apparatus interface 206, and the like.

The auxiliary storage device 203 stores programs, etc., installed in the information processing terminal 20. In response to an instruction to start to execute the program, the program stored in the auxiliary storage device 203 is loaded in the memory 202. The CPU 201 achieves functions of the information processing terminal 20 by executing the program loaded in the memory 202.

The touch panel 204 is an electronic assembly that has input function and display function. The touch panel 204 displays information, and accepts user's input operations, and the like. The touch panel 204 includes a display device 211 and an input device 212.

The display device 211 is a liquid crystal display, etc., and is provided for the touch panel 204 to display information. The input device 212 is an electronic assembly including a sensor for detecting a contact at the display device 211. A known detection method may be adopted for detecting the contact at the display device 211, such as electrostatic capacitance type, resistance film type, and optical type. Additionally, a contact between an object and a contact surface of the touch panel 204 is detected. A finger of the user, common or dedicated stylus pen, etc., are examples of such object.

The wireless communication device 205 is an electronic assembly, including an antenna, required for performing a communication through a wireless LAN (Local Area Network), mobile communication network, and the like. The apparatus interface 206 is an interface for communicating with the image forming apparatus 10. For example, in a case where the information processing terminal 20 is connected to the image forming apparatus 10 via the USB cable, the apparatus interface 206 may be a USB port.

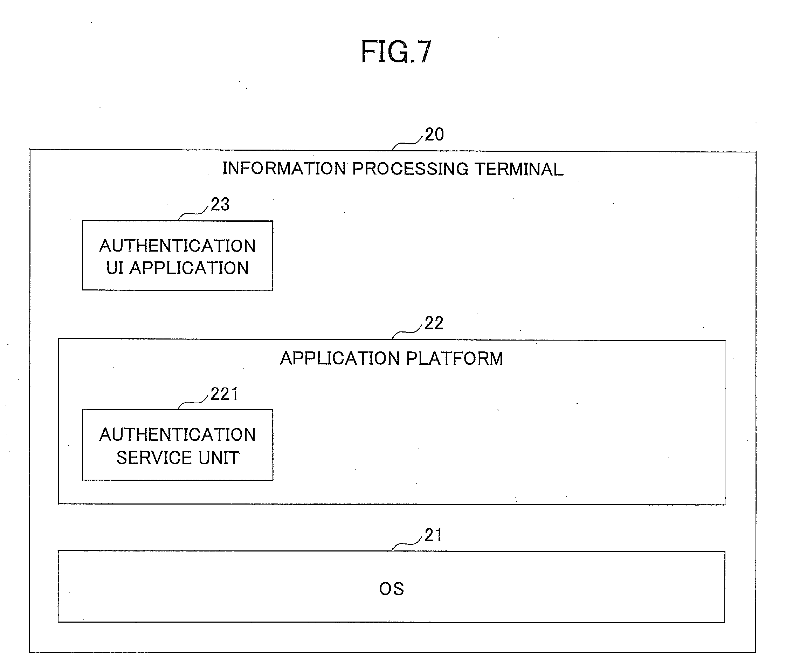

FIG. 7 is a diagram illustrating an example software configuration of the information processing terminal of the second embodiment. In FIG. 7, the information processing terminal 20 includes an OS 21, an application platform 22, an authentication UI application 23, and the like.

The OS 21 is a common OS. Additionally, a type of OS 21 of the information processing terminal 20 may be different from a type of the OS 125 of the image forming apparatus 10 (controller 11).

The application platform 22 provides higher order application programs with functions for coordinating with the control service 124, the SDK platform 123, or the SDK application package 122 implemented in the image forming apparatus 10 (controller 11), or for controlling the control service 124, the SDK platform 123, or the SDK application package 122. For example, in response to a request (call for API) from the higher order application programs, the application platform 22 performs call of methods corresponding to the request with respect to the control service 124, the SDK platform 123, the SDK application package 122, and the like. Additionally, for example, the method (API) of the control service 124, the SDK platform 123, the SDK application package 122, etc., may be in a format such as webAPI, and may be callable from external apparatuses via a network based on HTTP communication.

In FIG. 7, the application platform 22 includes an authentication service unit 221. The authentication service unit 221 displays a default log-in screen of the information processing terminal 20, and achieves the authentication function based on the default log-in screen through coordination with the authentication function of the image forming apparatus 10. Also, the authentication service unit 221 includes an interface (API) for implementing an application for extending the default log-in screen or the default authentication function. In a case where the application for extending the default log-in screen or the default authentication function is installed, the authentication service unit 221 delegates the authentication function to the application.

The authentication UI application 23 is an example application for extending the default authentication function of the authentication service unit 221. Specifically, the authentication UI application 23 displays a log-in screen appropriate for the card authentication. However, logic of the authentication function provided in the image forming apparatus 10 is still used (that is, effective utilization of assets).

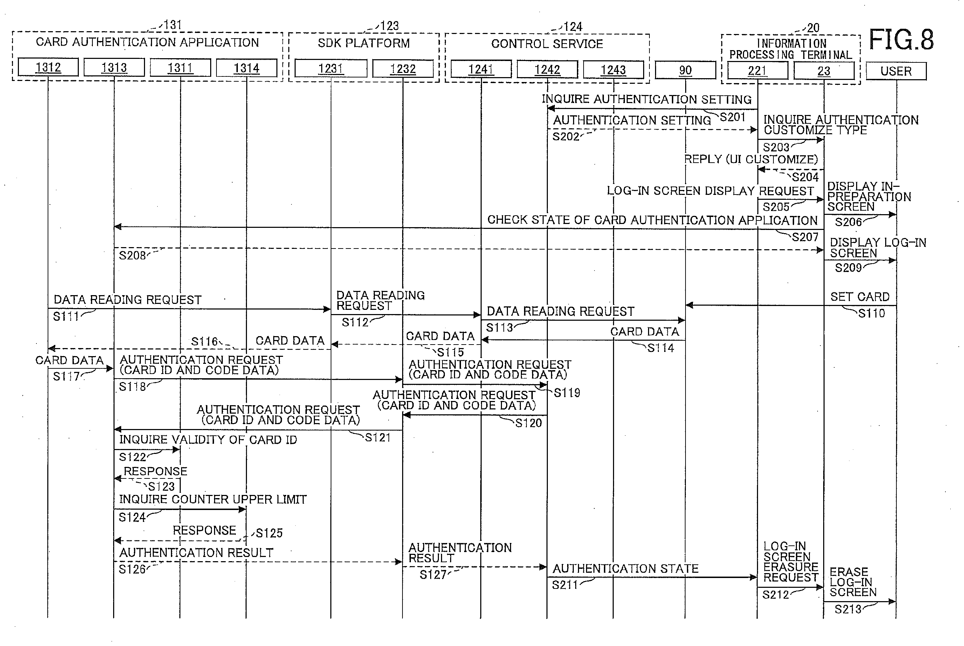

FIG. 8 is a sequence diagram illustrating an example process of card authentication of the second embodiment. In FIG. 8, identical reference numerals will be applied to steps that are substantially similar to those in FIG. 4, and descriptions thereof may be omitted.

Upon the information processing terminal 20 starting, the authentication service unit 221 inquires authentication setting to the authentication control unit 1242 (S201). The authentication control unit 1242 replies the authentication setting ("required" or "not required") in response to the inquiry (S202). In a case where "not required" is replied, following processes are not performed because limitation of the user's operation through the log-in screen is not required. In a case where "required" is replied, the authentication service unit 221 inquires authentication customize type with respect to application programs in the application platform 22 (S203). In the present embodiment, the inquiry is transmitted to the authentication UI application 23. Additionally, the authentication customize type means information indicating whether customization of the default function is required, and indicating how to customize if the customization of the default function is required. For example, "how to customize" indicates any one of to customize only log-in screen (hereinafter referred to as "UI customization"), to customize only authentication logic, and to customize both log-in screen and authentication logic.

In the present embodiment, the authentication UI application 23 achieves the UI customization. Therefore, the authentication UI application 23 transmits the reply indicating the UI customization to the authentication service unit 221 (S204). In response to receiving the reply indicating the UI customization, the authentication service unit 221 requests the authentication UI application 23 to display the log-in screen without displaying the default log-in screen (S205). That is, log-in screen display operation is delegated to the authentication UI application 23.

In response to the request to display the log-in screen, the authentication UI application 23 displays an in-preparation screen in the display device 211 (S206). For example, the in-preparation screen includes a message such as "Now starting. Please wait for a while".

The authentication UI application 23 checks a state of the card authentication application 131 (S207). For example, a predetermined message is transmitted to the log-in control unit 1313 of the card authentication application 131 so as to determine whether the card authentication application 131 has been normally started. The process of step S207 is periodically performed until a reply indicating being in a normal state is received from the card authentication application 131. That is, taking a difference of periods for performing starting operations between the information processing terminal 20 and the image forming apparatus 10 into account, the in-preparation screen is kept to be displayed until the starting operation of the image forming apparatus 10 is completed and it is determined that the card authentication application 131 is activated in a normal state.

In response to receiving the reply indicating being in a normal state from the card authentication application 131, the authentication UI application 23 erases the in-preparation screen, and displays the log-in screen in the display device 211 (S209). For example, the log-in screen includes a message such as "Set a card please" according to the card authentication.

Then, steps S110 - S127 described with reference to FIG. 4 are performed.

In response to the extended authentication control unit 1232 transmitting the authentication result to the authentication control unit 1242 in step S127, information indicating change of authentication state (log-in occurrence or log-out occurrence) in the image forming apparatus 10 is transmitted to the authentication service unit 221 (S211). For example, the authentication service unit 221 may acquire the information indicating change of authentication state by periodically inquiring the authentication state to the authentication control unit 1242. That is, the authentication state may be periodically inquired to the authentication control unit 1242, and a reply indicating the log-in occurrence may be transmitted to the authentication service unit 221 in a case of authentication success. Or, the authentication service unit 221 may register a listener for receiving a notification of authentication state change with respect to the authentication control unit 1242 before or after performing the process of step S205. The listener is an interface for receiving a notification indicating an event occurrence. For example, an address of a predetermined method of the authentication service unit 221 may be registered with respect to the authentication control unit 1242. In this case, the process of step S211 is achieved by calling the listener by the authentication control unit 1242. Also, the process of step S211 may be achieved in a different way.

In a case where the change of authentication state transmitted in step S211 indicates the log-in occurrence (that is, successful authentication), the authentication service unit 221 requests the authentication UI application 23 to erase the log-in screen (S212). In response to the request, the authentication UI application 23 erases the log-in screen (S213). Consequently, the user can use the image forming apparatus 10 through the information processing terminal 20.

Additionally, the authentication result transmitted in step S127 indicates the authentication failure, the process of step S211 may not be performed because the log-in screen is kept to be displayed even if the authentication failure is not transmitted to the authentication service unit 221.

Also, in FIG. 8, S101, S102, S128, and S129 illustrated in FIG. 4 are not illustrated. However, these steps may be also performed in the second embodiment. In this case, the log-in screen is not actually displayed because the operational panel 15 is not provided, where the default log-in screen is to be displayed in the operational panel 15 through the authentication control unit 1242.

Also, the authentication control unit 1242 may perform the processes of steps S101 and S128 in a case where the operational panel 15 is provided in the image forming apparatus 10, while the authentication control unit 1242 may perform the process of step S211 in a case where the image forming apparatus 10 is connected to the information processing terminal 20. Such configuration (operational panel 15 is provided or not, information processing terminal 20 is connected or not, etc.) of the image forming apparatus 10 may be determined, for example, based on information stored in the ROM 113, the HDD 114, etc., or based on information indicating whether inquiry (like a process of step S201) from the authentication service unit 221 has been received.

As illustrated in FIG. 8, in the second embodiment, the logic of the card authentication in the first embodiment can be applied to the card authentication in the second embodiment without any change. That is, respective units, related to the card authentication, in the image forming apparatus 10 of the first embodiment can be also used in the image forming apparatus 10 of the second embodiment. Therefore, according to the second embodiment, the authentication function implemented in the image forming apparatus 10 can be effectively used when the information processing terminal 20 serves as the operational unit of the image forming apparatus 10.

In the embodiments of the present disclosure, the image forming apparatus 10 is described as an example of the apparatus. However, for example, the embodiments of the present disclosure may be applied to an apparatus such as a projector, a digital camera, an electronic blackboard, and a TV conference system, where the information processing terminal 20 serves as the operational unit of the apparatus.

Also, a mobile recording medium other than the card may be used for the authentication.

Additionally, in the embodiments of the present disclosure, the USB driver unit 1241, the USB interface unit 1231, and the card reading control unit 1312 are examples of acquisition unit. The log-in control unit 1313 is an example of authentication unit. The authentication control unit 1242 is an example of erasing unit. The log-in screen is an example of screen for limiting user's operation. The username is an example of user identification information.

Herein above, although the present disclosure has been described with respect to a specific embodiment for a complete and clear disclosure, amendments, modifications and alternative constructions may be made.

The invention is defined by the following claims.

## Claims

1. An information processing system comprising:
an apparatus (10); and
an information processing terminal (20) having a touch panel (204) that has input function and display function, and being connectable to the apparatus (10) via a network;
said apparatus (10) comprising:
a data acquisition unit (1231, 1241, 1312) configured to acquire data from a mobile recording medium (80), said mobile recording medium (80) being a card having card identification information;
an authentication unit (1313) configured to perform authentication based on the acquired data; and
an erasing unit (1242) configured to erase a log-in screen for limiting user's operation in response to detecting a successful authentication performed by the authentication unit (1313) and detecting that an operational unit (15) is included in the apparatus (10), said operational unit (15) having a display unit and a touch function for inputting user input operation and being configured to display the log-in screen, wherein the erasing unit (1242) transmits a notification of the successful authentication to the information processing terminal (20) in response to detecting the successful authentication performed by the authentication unit (1313) and detecting that the information processing terminal (20) is connected to the apparatus (10) via a network,
wherein when the information processing terminal (20) is connected to the apparatus (10), the information processing terminal (20) displays the log-in screen instead of the operational unit (15), the information processing terminal (20) erases the log-in screen in response to receiving the notification from the erasing unit (1242), and the apparatus (10) allows the information processing terminal (20) to serve as an operational unit of the apparatus (10) to operate the apparatus (10);
**characterized in that**:
the information processing terminal (20) is detachably installed and fixed at a predetermined position on the apparatus (10);
wherein when the information processing terminal (20) is installed and fixed at the predetermined position, the information processing terminal (20) is connected to the apparatus (10) via a USB cable, and
when the information processing terminal (20) is detached from the apparatus (10) the information processing terminal (20) communicates with the apparatus (10) through wireless communication.

2. An information processing method comprising:
providing an apparatus (10) and an information processing terminal (20) having a touch panel (204) that has input function and display function, and which is connectable to the apparatus (10) via a network;
acquiring data from a mobile recording medium (80), said mobile recording medium (80) being a card having card identification information;
performing authentication based on the acquired data;
erasing a log-in screen for limiting user's operation in response to detecting a successful authentication in the performed authentication and detecting that an operational unit (15) is included in the apparatus (10), said operational unit (15) having a display unit and a touch function for inputting user input operation and being configured to display the log-in screen; and
transmitting a notification of the successful authentication to the information processing terminal (20) in response to detecting the successful authentication in the performed authentication and detecting that the information processing terminal (20) is connected to the apparatus (10) via a network;
wherein when the information processing terminal (20) is connected to the apparatus (10), the information processing terminal (20) displays the log-in screen instead of the operational unit (15), the information processing terminal (20) erases the log-in screen in response to receiving the notification from the apparatus (10), and the apparatus (10) allows the information processing terminal (20) to serve as an operation unit of the apparatus (10) to operate the apparatus (10);
**characterized by**:
detachably installing and fixing the information processing terminal (20) at a predetermined position on the apparatus (10);
wherein when the information processing terminal (20) is installed and fixed at the predetermined position, the information processing terminal (20) is connected to the apparatus (10) via a USB cable, and
when the information processing terminal (20) is detached from the apparatus (10) the information processing terminal (20) communicates with the apparatus (10) through wireless communication.

## Patentansprüche

1. Informationsverarbeitungssystem, das aufweist:
eine Vorrichtung (10); und
ein Informationsverarbeitungsterminal (20) mit einem Bildschirm-Berührfeld (204), das eine Eingabefunktion und eine Anzeigefunktion aufweist, und mit der Vorrichtung (10) über ein Netzwerk verbindbar ist;
wobei die Vorrichtung (10) aufweist:
eine Datenerfassungseinheit (1231, 1241, 1312), die konfiguriert ist, um Daten von einem mobilen Aufzeichnungsmedium (80) zu erfassen, wobei das mobile Aufzeichnungsmedium (80) eine Karte mit einer Kartenidentifikationsinformation ist;
eine Authentifizierungseinheit (1313), die konfiguriert ist, um eine Authentifizierung basierend auf den erfassten Daten durchzuführen; und
eine Löscheinheit (1242), die konfiguriert ist, um einen Anmeldebildschirm zum Einschränken des Betriebs des Benutzers zu löschen, und zwar als Reaktion auf das Erkennen einer erfolgreichen Authentifizierung, die von der Authentifizierungseinheit (1313) durchgeführt wird, und das Erkennen, dass eine Betriebseinheit (15) in der Vorrichtung (10) enthalten ist, wobei die Betriebseinheit (15) eine Anzeigeeinheit und eine Berührfunktion zum Eingeben einer Eingabeoperation eines Nutzers aufweist und konfiguriert ist, um den Anmeldebildschirm anzuzeigen, wobei die Löscheinheit (1242) eine Benachrichtigung über die erfolgreiche Authentifizierung an das Informationsverarbeitungsterminal (20) sendet, und zwar als Reaktion auf das Erkennen der erfolgreichen Authentifizierung, die von der Authentifizierungseinheit (1313) durchgeführt wird, und das Erkennen, dass das Informationsverarbeitungsterminal (20) über ein Netzwerk mit der Vorrichtung (10) verbunden ist,
wobei wenn das Informationsverarbeitungsterminal (20) mit der Vorrichtung (10) verbunden ist, zeigt das Informationsverarbeitungsterminal (20) den Anmeldebildschirm anstatt der Betriebseinheit (15), wobei das Informationsverarbeitungsterminal (20) den Anmeldebildschirm löscht, und zwar als Reaktion auf den Empfang der Benachrichtigung von der Löscheinheit (1242), und die Vorrichtung (10) dem Informationsverarbeitungsterminal (20) erlaubt, als eine Betriebseinheit der Vorrichtung (10) in Verwendung zu sein, um die Vorrichtung (10) zu Betreiben;
**dadurch gekennzeichnet, dass**:
das Informationsverarbeitungsterminal (20) lösbar bzw. abnehmbar installiert und an einer vorbestimmten Position an der Vorrichtung (10) befestigt ist;
wobei wenn das Informationsverarbeitungsterminal (20) installiert und an der vorbestimmten Position befestigt ist, ist das Informationsverarbeitungsterminal (20) mit bzw. an der Vorrichtung (10) über ein USB-Kabel verbunden bzw. angeschlossen, und
wenn das Informationsverarbeitungsterminal (20) von der Vorrichtung (10) gelöst bzw. abgetrennt ist, kommuniziert das Informationsverarbeitungsterminal (20) mit der Vorrichtung (10) durch eine drahtlose Kommunikation.

2. Informationsverarbeitungsverfahren, das aufweist:
Bereitstellen einer Vorrichtung (10) und eines Informationsverarbeitungsterminals (20) mit einem Bildschirm-Berührfeld (204), das eine Eingabefunktion und eine Anzeigefunktion aufweist und welches mit der Vorrichtung (10) über ein Netzwerk verbindbar ist;
Erfassen von Daten von einem mobilen Aufzeichnungsmedium (80), wobei das mobile Aufzeichnungsmedium (80) eine Karte mit einer Kartenidentifikationsinformation ist;
Durchführen einer Authentifizierung basierend auf den erfassten Daten;
Löschen eines Anmeldebildschirm zum Einschränken des Betriebs des Benutzers, und zwar als Reaktion auf das Erkennen einer erfolgreichen Authentifizierung in der durchgeführten Authentifizierung, und das Erkennen, dass eine Betriebseinheit (15) in der Vorrichtung (10) enthalten ist, wobei die Betriebseinheit (15) eine Anzeigeeinheit und eine Berührfunktion zum Eingeben einer Eingabeoperation eines Nutzers aufweist und konfiguriert ist, um den Anmeldebildschirm anzuzeigen; und
Senden einer Benachrichtigung über die erfolgreiche Authentifizierung an das Informationsverarbeitungsterminal (20), und zwar als Reaktion auf das Erkennen der erfolgreichen Authentifizierung in der durchgeführten Authentifizierung und das Erkennen, dass das Informationsverarbeitungsterminal (20) über ein Netzwerk mit der Vorrichtung (10) verbunden ist,
wobei wenn das Informationsverarbeitungsterminal (20) mit der Vorrichtung (10) verbunden ist, zeigt das Informationsverarbeitungsterminal (20) den Anmeldebildschirm anstatt der Betriebseinheit (15), wobei das Informationsverarbeitungsterminal (20) den Anmeldebildschirm löscht, und zwar als Reaktion auf den Empfang der Benachrichtigung von der Vorrichtung (10), und die Vorrichtung (10) dem Informationsverarbeitungsterminal (20) erlaubt, als eine Betriebseinheit der Vorrichtung (10) in Verwendung zu sein, um die Vorrichtung (10) zu Betreiben;
**gekennzeichnet durch**:
lösbares bzw. abnehmbares Installieren und Befestigung des Informationsverarbeitungsterminals (20) an einer vorbestimmten Position an der Vorrichtung (10);
wobei wenn das Informationsverarbeitungsterminal (20) installiert und an der vorbestimmten Position befestigt ist, ist das Informationsverarbeitungsterminal (20) mit bzw. an der Vorrichtung (10) über ein USB-Kabel verbunden bzw. angeschlossen, und
wenn das Informationsverarbeitungsterminal (20) von der Vorrichtung (10) gelöst bzw. abgetrennt ist, kommuniziert das Informationsverarbeitungsterminal (20) mit der Vorrichtung (10) durch eine drahtlose Kommunikation.

## Revendications

1. Système de traitement d'informations comprenant :
un appareil (10) ; et
un terminal de traitement d'informations (20) ayant un panneau tactile (204) qui a une fonction d'entrée et une fonction d'affichage, et pouvant être connecté à l'appareil (10) via un réseau ;
ledit appareil (10) comprenant :
une unité d'acquisition de données (1231, 1241, 1312) configurée pour acquérir des données à partir d'un support d'enregistrement mobile (80), ledit support d'enregistrement mobile (80) étant une carte ayant des informations d'identification de carte ;
une unité d'authentification (1313) configurée pour effectuer une authentification sur la base des données acquises ; et
une unité d'effacement (1242) configurée pour effacer un écran de connexion pour limiter le fonctionnement de l'utilisateur en réponse à la détection d'une authentification réussie effectuée par l'unité d'authentification (1313) et à la détection qu'une unité opérationnelle (15) est incluse dans l'appareil (10), ladite unité opérationnelle (15) ayant une unité d'affichage et une fonction tactile pour entrer une opération d'entrée d'utilisateur et étant configurée pour afficher l'écran de connexion, dans lequel l'unité d'effacement (1242) transmet une notification de l'authentification réussie au terminal de traitement d'informations (20) en réponse à la détection de l'authentification réussie effectuée par l'unité d'authentification (1313) et à la détection que le terminal de traitement d'informations (20) est connecté à l'appareil (10) via un réseau,
dans lequel lorsque le terminal de traitement d'informations (20) est connecté à l'appareil (10), le terminal de traitement d'informations (20) affiche l'écran de connexion au lieu de l'unité opérationnelle (15), le terminal de traitement d'informations (20) efface l'écran de connexion en réponse à la réception de la notification à partir de l'unité d'effacement (1242), et l'appareil (10) permet au terminal de traitement d'informations (20) de servir d'unité opérationnelle de l'appareil (10) pour faire fonctionner l'appareil (10) ;
**caractérisé en ce que** :
le terminal de traitement d'informations (20) est installé de manière amovible et fixé à une position prédéterminée sur l'appareil (10) ;
dans lequel lorsque le terminal de traitement d'informations (20) est installé et fixé à la position prédéterminée, le terminal de traitement d'informations (20) est connecté à l'appareil (10) via un câble USB, et
lorsque le terminal de traitement d'informations (20) est détaché de l'appareil (10), le terminal de traitement d'informations (20) communique avec l'appareil (10) par communication sans fil.

2. Procédé de traitement d'informations comprenant :
la fourniture d'un appareil (10) et d'un terminal de traitement d'informations (20) ayant un panneau tactile (204) qui a une fonction d'entrée et une fonction d'affichage, et qui peut être connecté à l'appareil (10) via un réseau ;
l'acquisition des données à partir d'un support d'enregistrement mobile (80), ledit support d'enregistrement mobile (80) étant une carte ayant des informations d'identification de carte ;
l'exécution d'une authentification sur la base des données acquises ;
l'effacement d'un écran de connexion pour limiter le fonctionnement de l'utilisateur en réponse à la détection d'une authentification réussie dans l'authentification effectuée et détecter qu'une unité opérationnelle (15) est incluse dans l'appareil (10), ladite unité opérationnelle (15) ayant une unité d'affichage et une fonction tactile pour entrer une opération d'entrée d'utilisateur et configurée pour afficher l'écran de connexion ; et
la transmission d'une notification de l'authentification réussie au terminal de traitement d'informations (20) en réponse à la détection de l'authentification réussie dans l'authentification effectuée et à la détection que le terminal de traitement d'informations (20) est connecté à l'appareil (10) via un réseau ;
dans lequel lorsque le terminal de traitement d'informations (20) est connecté à l'appareil (10), le terminal de traitement d'informations (20) affiche l'écran de connexion au lieu de l'unité opérationnelle (15), le terminal de traitement d'informations (20) efface l'écran de connexion en réponse à la réception de la notification à partir de l'appareil (10), et l'appareil (10) permet au terminal de traitement d'informations (20) de servir d'unité opérationnelle de l'appareil (10) pour faire fonctionner l'appareil (10) ;
**caractérisé par**:
l'installation et la fixation de manière amovible du terminal de traitement d'informations (20) à une position prédéterminée sur l'appareil (10) ;
dans lequel lorsque le terminal de traitement d'informations (20) est installé et fixé à la position prédéterminée, le terminal de traitement d'informations (20) est connecté à l'appareil (10) via un câble USB, et
lorsque le terminal de traitement d'informations (20) est détaché de l'appareil (10), le terminal de traitement d'informations (20) communique avec l'appareil (10) par communication sans fil.
